# EUROPÄISCHE PATENTSCHRIFT

(11) **EP 3 380 378 B1**
(45) Veröffentlichungstag und Bekanntmachung des Hinweises auf die Patenterteilung: **06.01.2021**
(21) Anmeldenummer: 16798510.0
(22) Anmeldetag: 21.11.2016
(51) Int. Cl.: B60T 17/22, B60T 13/66, B60T 8/17, B60L 7/26

(54) **VERFAHREN ZUR STEUERUNG ODER REGELUNG EINES BREMSSYSTEMS UND BREMSSYSTEM**
METHOD FOR CONTROLLING OR REGULATING A BRAKE SYSTEM AND BRAKE SYSTEM
PROCÉDÉ PERMETTANT DE COMMANDER OU DE RÉGULER UN SYSTÈME DE FREINAGE ET SYSTÈME DE FREINAGE

(30) Priorität: 25.11.2015 DE 102015120439
(43) Veröffentlichungstag der Anmeldung: 03.10.2018
(73) Patentinhaber: KNORR-BREMSE Systeme für Schienenfahrzeuge GmbH, 80809 München (DE)
(72) Erfinder: HERDEN, Marc-Oliver, 81377 München (DE); FISCHER, Marcus, 80469 München (DE); VOIGTLÄNDER-TETZNER, Roland, 85591 Vaterstetten (DE)
(86) Internationale Anmeldenummer: PCT/EP2016/078329
(87) Internationale Veröffentlichungsnummer: WO 2017/089305

(56) Entgegenhaltungen:
- EP-A1- 2 626 260
- DE-A1- 2 801 778
- DE-A1-102009 042 965
- DE-A1-102009 051 019
- DE-A1-102011 006 002

## Beschreibung

Die Erfindung betrifft ein Verfahren zur Steuerung oder Regelung eines Bremssystems, insbesondere eines Bremssystems eines Schienenfahrzeugs, sowie ein Bremssystem, insbesondere ein Bremssystem eines Schienenfahrzeugs. Außerdem betrifft die Erfindung ein Schienenfahrzeug mit wenigstens einem Wagen, das mit einem solchen Bremssystem ausgestattet ist.

Bei der Zulassung von Schienenfahrzeugen erfolgt regelmäßig auch die Prüfung des Bremssystems nach nationalen und internationalen Vorschriften. Dabei wird u.a. das Bremsvermögen des Bremssystems als sogenanntes "Bremsgewicht" ermittelt. Anhand des Bremsgewichts wird zum Beispiel bestimmt, auf welchen Streckenabschnitten das Schienenfahrzeug mit welcher Maximalgeschwindigkeit fahren darf. In der Sicherheitsrichtlinie Fahrzeug SIRF ist für Deutschland beispielsweise für den anrechenbaren Zustand der Funktion "Bremskraft erzeugen, Bremsung bei v>0" die Sicherheitsanforderungsstufe (SAS) 4 festgelegt. Die Sicherheitsanforderungsstufe stellt eine Anforderung für die Zuverlässigkeit des Systems in Abhängigkeit von der Gefährdung dar, wobei Level 4 die höchste Sicherheitsstufe darstellt. Auf europäischer Ebene wird für elektrische / elektronische Systeme die Sicherheitsanforderungsstufe nach Normen wie EN 50129 oder EN 61508 auch als Sicherheits-Integritätslevel (SIL) bezeichnet. Derzeit wird für die Schnellbremsfunktion eines Bremssystems bezüglich der Anrechenbarkeit normativ keine SIL4-Integrität gefordert.

Schienenfahrzeuge sind in der Regel mit mehreren Bremssystemen ausgestattet, die in den verschiedenen Bremsstellungen zum Einsatz kommen. Zu den Bremssystemen zählen insbesondere Druckluftbremsen, aerodynamische Bremsen, elektrodynamische Bremsen, Retarderbremsen bei Dieselfahrzeugen, Magnetschienenbremsen und Wirbelstrombremsen. Die elektro-pneumatische Bremse wird zum Beispiel als eine Zusatzeinrichtung zur Ansteuerung der Druckluftbremse zum gleichzeitigen Bremsen oder Lösen aller Bremsaktuatoren eines Wagens eines Schienenfahrzeugs oder auch mehrerer oder aller Wägen eines Schienenfahrzeugs eingesetzt. Bei den Druckluftbremsen wird zudem zwischen direkt und indirekt wirkenden Bremsen unterschieden. Zu den Bremsstellungen zählen insbesondere die Personenzugbremse P für leichte bis mittelschwere Schienenfahrzeuge, die Hochleistungsbremse R für höhere Fahrzeuggeschwindigkeiten, die Güterzugbremse G für schwere und/oder lange Schienenfahrzeuge, die zusätzlich eingesetzte Magnetschienenbremse R+MG oder P+Mg für Schnellbremsungen, die zusätzlich eingesetzte Wirbelstrombremse R+WB für Schnellbremsungen, die zusätzliche elektrodynamische Bremse P+E oder R+E für Triebfahrzeuge. Außerdem sollten nach weit verbreiterter Ansicht bei allen Bremsungen die maximal zulässigen Haftwerte zwischen Rad und Schiene nicht überschritten werden.

Schnellbremsungen, zu denen im Rahmen der Erfindung alle Arten von Schnell-, Zwangs- und Notbremsungen gehören sollen, müssen mit einem hohen Sicherheitsniveau durchgeführt werden. Solche Schnellbremsungen werden üblicherweise pneumatisch über das Entlüften der Hauptluftleitung oder elektrisch durch Öffnen einer Sicherheitsschleife aktiviert; zudem kann zwischen einer manuellen Aktivierung zum Beispiel durch den Fahrzeugführer oder einen Fahrgast und einer automatischen Aktivierung durch ein Sicherheitssystem unterschieden werden.

Die DE 10 2009 051 019 A1 beschreibt eine geschwindigkeitsabhängig gestufte Notbremseinrichtung eines Schienenfahrzeugs mit einem hierarchischen Ablauf, wobei eine Notbremsung durch eine generatorische Bremse und/oder eine elektro-pneumatische Bremse bremskraftgeregelt und geschwindigkeitsabhängig durchgeführt wird.

Die DE 10 2011 110 047 A1 offenbart eine Notbremseinrichtung für ein Schienenfahrzeug aufweisend eine Notbremssteuerventileinrichtung zum Bereitstellen eines Notbremssteuerdrucks und eine Notbremseinstelleinrichtung zum Einstellen des bereitgestellten Notbremssteuerdrucks in Abhängigkeit von einem Lastwert und einem Geschwindigkeitswert des Schienenfahrzeugs.

Die DE 10 2011 006 002 A1 schlägt zur Erhöhung der Bremswegsicherheit unter verschiedenen Betriebszuständen vor, Schienenfahrzeuge mit einem anrechenbaren verzögerungskraftgeregelten Reibungsbremssystem auszurüsten.

Die DE 10 2012 010 519 B3 beschreibt ein Verfahren zur Steuerung einer Druckluftbremseinrichtung eines Schienenfahrzeugs, die eine geregelte elektro-pneumatische Bremseinrichtung mit Bremsdruckregelung und eine ungeregelte Bremsdrucksteuereinrichtung zur Erzeugung eines ungeregelten Bremsdruck aufweist. Bei diesem Verfahren werden im Fall einer Schnellbremsung die geregelte elektro-pneumatische Bremseinrichtung und die ungeregelte Bremsdrucksteuereinrichtung gleichzeitig aktiviert und wird ein Bremsdruck in einen pneumatischen Bremsaktuator in Abhängigkeit von einem Vergleich der von den beiden Bremseinrichtungen erzeugten Bremsdrücke eingesteuert.

Die DE 28 01 778 A1 offenbart eine elektro-pneumatische Bremse mit einer Einrichtung zur Bildung eines lastproportionalen Signals zur lastabhängigen Beeinflussung eines Bremsanforderungssignals.

Die DE 10 2009 042 965 A1 offenbart ein Bremssystem mit einem Aktuator, der einen Steuerungsanschluss aufweist, der zum Empfangen von Steuersignalen über eine Datenleitung mit einer Bremssteuerung verbunden ist.

Es ist eine Aufgabe der Erfindung, ein verbessertes Verfahren zur Steuerung/Regelung eines Bremssystems sowie ein verbessertes Bremssystem zu schaffen, mit denen erhöhte Sicherheitsanforderungen eingehalten werden können.

Diese Aufgabe wird gelöst durch die Lehre der unabhängigen Ansprüche. Bevorzugte Weiterbildungen der Erfindung sind Gegenstand der abhängigen Ansprüche.

Erfindungsgemäß wird vorgeschlagen, im Fall einer Schnellbremsung einen Basis-Bremsdruck bereitzustellen und den Bremsdruck ausgehend von diesem Basis-Bremsdruck durch die elektro-pneumatische Bremseinrichtung in Abhängigkeit von einer Last und/oder einer Geschwindigkeit, bevorzugt in Abhängigkeit von Last und Geschwindigkeit zu verändern. Auf diese Weise können auch im Fall einer Schnellbremsung eine Anpassung an die Zielerreichung und/oder eine Nachregelung der Bremswege vorgenommen werden. Außerdem können systemimmanente Schwankungen und Toleranzen kompensiert werden. Ferner besteht die Möglichkeit, die elektro-pneumatische Bremseinrichtung in der Schnellbremsung anzurechnen, insbesondere hinsichtlich Bremsgewicht anzurechnen.

In einer vorteilhaften Ausgestaltung der Erfindung ist der Basis-Bremsdruck ein minimaler Bremsdruck. In diesem Fall wird der von der pneumatischen Bremseinrichtung oder der elektro-pneumatischen Bremseinrichtung erzeugte Bremsdruck ausgehend von dem bereitgestellten Basis-Bremsdruck in Abhängigkeit von der Last und/oder der Geschwindigkeit vergrößert.

In einer anderen vorteilhaften Ausgestaltung der Erfindung ist der Basis-Bremsdruck ein maximaler Bremsdruck. In diesem Fall wird der von der pneumatischen Bremseinrichtung oder der elektro-pneumatischen Bremseinrichtung erzeugte Bremsdruck ausgehend von dem bereitgestellten Basis-Bremsdruck in Abhängigkeit von der Last und/oder der Geschwindigkeit verkleinert.

Der Bremsdruck sollte während der Schnellbremsung vorzugsweise einen vorgegebenen unteren Grenzwert nicht unterschreiten.

Die Erfindung ist in vorteilhafter Weise anwendbar bei einem Schienenfahrzeug mit wenigstens einem Wagen, der mit wenigstens einem pneumatischen Bremsaktuator ausgestattet ist, oder bei einem Schienenfahrzeug mit mehreren Wägen, die zu einem Fahrzeugverbund aneinander gekoppelt sind, wobei jeder Wagen wenigstens einen pneumatischen Bremsaktuator aufweist.

Vorzugsweise ist die elektro-pneumatische Bremseinrichtung im Fall einer Schnellbremsung anrechenbar.

Vorzugsweise ist die funktionale Sicherheit des Schienenfahrzeugs gegeben, wenn die Bremskraft von maximal M Wägen von insgesamt N Wägen ausfällt. Beispielsweise ist die funktionale Sicherheit des Schienenfahrzeugs gegeben, wenn die Bremskraft von maximal 1 Wagen von insgesamt 4 Wägen ausfällt.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen:
- Fig. 1: ein stark vereinfachtes Schema eines Bremssytems eines Schienenfahrzeugs gemäß einem Ausführungsbeispiel der Erfindung;
- Fig. 2: ein stark vereinfachtes Schema zur Erläuterung des Verfahrens zur Steuerung oder Regelung des Bremssystems gemäß einem Ausführungsbeispiel der Erfindung; und
- Fig. 3: ein stark vereinfachtes Schema zur Erläuterung eines herkömmlichen Verfahrens zur Steuerung oder Regelung eines Bremssystems.

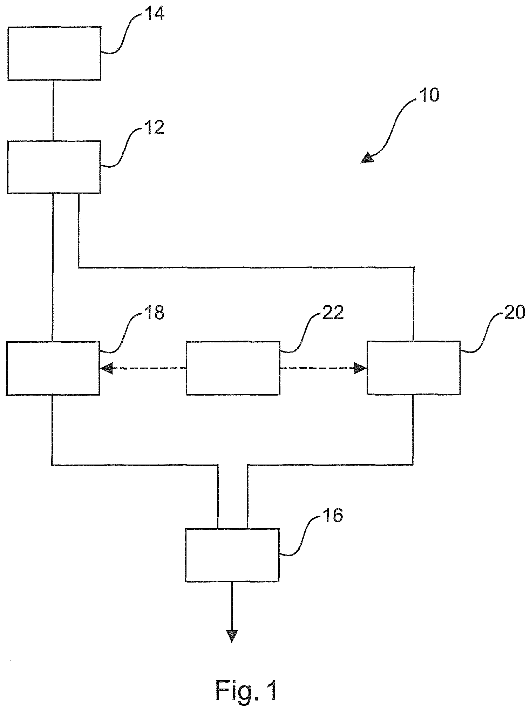

Fig. 1 zeigt ein stark vereinfachtes Schema einer bevorzugten Ausführungsform eines Bremssystems mit einer Druckluftbremseinrichtung 10 eines Schienenfahrzeugs.

Die Druckluftbremseinrichtung 10 des Bremssystems weist einen Hauptluftbehälter 12 auf, in dem die von einem Kompressor 14 zur Verfügung gestellte Druckluft gespeichert werden kann. Die Druckluft wird über eine Hauptluftleitung einem pneumatischen Bremsaktuator 16 zugeführt. Im Fall einer direkten Bremse wird die Druckluft dem Bremsaktuator direkt als Bremsdruck zur Verfügung gestellt, im Fall einer indirekten Bremse wirkt der Druck der Hauptluftleitung auf eine Ventileinrichtung, um dem Bremsaktuator zum Beispiel aus einem Hilfsdruckbehälter einen Bremsdruck zur Verfügung zu stellen.

Bei der Ausführungsform von Fig. 1 weist die Druckluftbremseinrichtung 10 eine pneumatische Bremseinrichtung 18 und eine elektro-pneumatische Bremseinrichtung 20 auf. Aufbauten und Funktionsweisen dieser beiden Bremseinrichtungen 18, 20 sind dem Fachmann grundsätzlich bekannt, sodass hier auf eine nähere Beschreibung verzichtet werden kann. Auch ist die Erfindung auf keine speziellen Arten von elektro-pneumatischen bzw. pneumatischen Bremseinrichtungen 18, 20 beschränkt.

Die beiden Bremseinrichtungen 18, 20 werden von einer Steuerung 22 der Druckluftbremseinrichtung 10 angesteuert. Diese Steuerung 22 kann zum Beispiel als eine gemeinsame Steuerung für beide Bremseinrichtungen 18, 20 oder als zwei separate Steuerungen für jeweils eine der beiden Bremseinrichtungen 18, 20 ausgestaltet sein. Außerdem kann die Steuerung 22 zum Beispiel separat von den Bremseinrichtungen 18, 20 ausgebildet sein oder in diese integriert sein. Ferner kann die Steuerung elektrisch / elektronischund pneumatisch ausgeführt sein.

Die Erfindung bezieht sich auf die Steuerung oder Regelung des Bremssytems mit dieser Druckluftbremseinrichtung 10 im Fall einer Schnell-, Zwangs- oder Notbremsung (d.h. Schnellbremsung im Sinne der Erfindung). Die Steuerung oder Regelung des Bremssystems für andere Betriebssituationen ist nicht eingeschränkt, d.h. grundsätzlich beliebig.

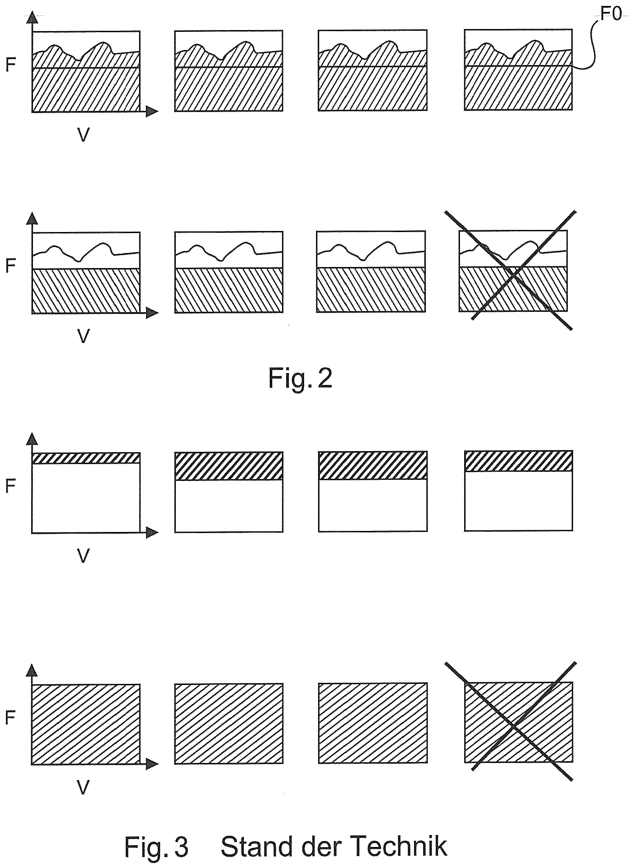

Das erfindungsgemäße Steuerungs- oder Regelungsverfahren des Bremssystems im Fall einer Schnellbremsung wird anhand von Fig. 2 **und** 3 näher erläutert. Dabei veranschaulicht Fig. 2 das erfindungsgemäße Verfahren, während Fig. 3 zum Vergleich ein herkömmliches Steuerungsverfahren zeigt, jeweils für den Fall eines Schienenfahrzeugs mit beispielhaft vier Wägen.

In den Schemata der Fig. 2 und 3 ist jeweils der Bremsdruck F über der Geschwindigkeit v des Schienenfahrzeugs dargestellt. Dabei veranschaulicht das obere Schema jeweils die Anrechenbarkeit hinsichtlich des Bremsgewichts in Zusammenhang mit der Zulassung, während das untere Schema jeweils die funktionale Sicherheit veranschaulicht.

Bei herkömmlichen Bremssystemen wird im Fall einer Schnellbremsung eine pneumatische oder elektro-pneumatische Bremseinrichtung aktiviert und bei Bedarf durch eine elektrodynamische Bremseinrichtung unterstützt, wie in Fig. 3 gezeigt. Der von der (elektro-)pneumatischen Bremseinrichtung bereitgestellte Bremsdruck F ist für die verschiedenen Wägen des Schienenfahrzeugs in der Regel mit unterschiedlichen Werten anrechenbar, sodass die elektrodynamische Bremseinrichtung ebenfalls mit unterschiedlichen Werten angerechnet werden muss, um für jeden Wagen eine im Wesentlichen identische Kennzahl für das Bremshundertstel Brh zu erzielen.

Bezüglich der funktionalen Sicherheit wird herkömmlicherweise zum Beispiel gefordert, dass der Ausfall der Bremse zum Beispiel für maximal einen von vier Wägen (allgemein maximal M von insgesamt N) möglich sein muss.

Wie in Fig. 2 veranschaulicht, wird in dem erfindungsgemäßen Verfahren zur Steuerung oder Regelung des Bremssystems des Schienenfahrzeugs im Fall einer Schnellbremsung durch die pneumatische Bremseinrichtung 18 (alternativ durch die elektro-pneumatische Bremseinrichtung 20) ein Basis-Bremsdruck F0 für den Bremsaktuator 16 bereitgestellt. In der Ausführungsform von Fig. 2 ist dieser Basis-Bremsdruck F0 ein minimaler Bremsdruck, der mindestens so groß ist wie ein vorgegebener unterer Grenzwert des Bremsdrucks, der während der Schnellbremsung des Schienenfahrzeugs nicht unterschritten werden darf.

Die Schnellbremsung wird unterstützt durch die elektro-pneumatische Bremseinrichtung 20. Insbesondere wird der Bremsdruck F ausgehend von dem bereitgestellten Basis-Bremsdruck F0 durch die elektro-pneumatische Bremseinrichtung 20 in Abhängigkeit von einer Last und/oder einer Geschwindigkeit v des Schienenfahrzeugs vergrößert.

Wie in Fig. 2 gezeigt, ist vorzugsweise der resultierende Bremsdruck F aus Basis-Bremsdruck und Bremsdruckvergrößerung durch die elektro-pneumatische Bremseinrichtung 20 für die Schnellbremsung hinsichtlich Bremsgewicht anrechenbar.

Auch bei dem Steuerungsverfahren der Erfindung wird bezüglich der funktionalen Sicherheit vorzugsweise gefordert, dass der Ausfall der Bremse für maximal M von insgesamt N Wägen möglich sein muss.

In einer anderen Ausführungsform ist der Basis-Bremsdruck F0 ein maximaler Bremsdruck und wird der Bremsdruck F ausgehend von dem bereitgestellten Basis-Bremsdruck F0 durch die elektro-pneumatische Bremseinrichtung 20 in Abhängigkeit von einer Last und/oder einer Geschwindigkeit v des Schienenfahrzeugs verkleinert. Dabei darf der resultierende Bremsdruck einen vorgegebenen unteren Grenzwert des Bremsdrucks nicht unterschreiten.

### BEZUGSZEICHENLISTE

- 10: Druckluftbremseinrichtung
- 12: Hauptluftbehälter
- 14: Kompressor
- 16: pneumatischer Bremsaktuator
- 18: pneumatische Bremseinrichtung
- 20: elektro-pneumatische Bremseinrichtung
- 22: Steuerung

- F: Bremsdruck, Bremsgewicht
- F0: Basis-Bremsdruck
- v: Geschwindigkeit

## Patentansprüche

1. Verfahren zur Steuerung oder Regelung eines Bremssystems, insbesondere eines Bremssystems eines Schienenfahrzeugs, wobei das Bremssystem wenigstens einen pneumatischen Bremsaktuator (16) und eine elektro-pneumatische Bremseinrichtung (20) zum Erzeugen eines Bremsdrucks (F) aufweist,
**dadurch gekennzeichnet, dass**
im Fall einer Schnellbremsung eine pneumatische Bremseinrichtung (18) einen Basis-Bremsdruck (F0) bereitstellt und die elektro-pneumatische Bremseinrichtung (20) den Bremsdruck (F) ausgehend von dem bereitgestellten Basis-Bremsdruck (F0) in Abhängigkeit von einer Last und/oder einer Geschwindigkeit (v) verändert.

2. Verfahren nach Anspruch 1, bei welchem
der Basis-Bremsdruck (F0) ein minimaler Bremsdruck ist und der Bremsdruck (F) ausgehend von dem bereitgestellten Basis-Bremsdruck (F0) in Abhängigkeit von der Last und/oder der Geschwindigkeit (v) vergrößert wird.

3. Verfahren nach Anspruch 1, bei welchem
der Basis-Bremsdruck (F0) ein maximaler Bremsdruck ist und der Bremsdruck (F) ausgehend von dem bereitgestellten Basis-Bremsdruck (F0) in Abhängigkeit von der Last und/oder der Geschwindigkeit (v) verkleinert wird.

4. Verfahren nach einem der vorhergehenden Ansprüche, bei welchem
der Bremsdruck (F) während der Schnellbremsung einen vorgegebenen unteren Grenzwert nicht unterschreitet.

5. Bremssystem, insbesondere eines Schienenfahrzeugs, aufweisend wenigstens einen pneumatischen Bremsaktuator (16), eine pneumatische Bremseinrichtung (18) zum Erzeugen eines Bremsdrucks (F), eine elektro-pneumatische Bremseinrichtung (20) zum Erzeugen eines Bremsdrucks (F) und eine Steuerung (22),
**dadurch gekennzeichnet, dass**
die Steuerung (22) ausgestaltet ist, um die pneumatische Bremseinrichtung (18) im Fall einer Schnellbremsung so anzusteuern, dass die pneumatische Bremseinrichtung (18) einen Basis-Bremsdruck (F0) bereitstellt; und
der von der pneumatischen Bremseinrichtung (18) erzeugte Bremsdruck (F) ausgehend von dem bereitgestellten Basis-Bremsdruck (F0) durch die elektro-pneumatische Bremseinrichtung (20) in Abhängigkeit von einer Last und/oder einer Geschwindigkeit (v) veränderbar ist.

6. Bremssystem, insbesondere eines Schienenfahrzeugs, aufweisend wenigstens einen pneumatischen Bremsaktuator (16), eine elektro-pneumatische Bremseinrichtung (20) zum Erzeugen eines Bremsdrucks (F) und eine Steuerung (22),
**dadurch gekennzeichnet, dass**
die Steuerung (22) ausgestaltet ist, um die elektro-pneumatische Bremseinrichtung (20) im Fall einer Schnellbremsung so anzusteuern, dass die elektro-pneumatische Bremseinrichtung (20) einen Basis-Bremsdruck (F0) bereitstellt; und
der von der elektro-pneumatischen Bremseinrichtung (20) erzeugte Bremsdruck (F) ausgehend von dem bereitgestellten Basis-Bremsdruck (F0) durch die elektro-pneumatische Bremseinrichtung (20) in Abhängigkeit von einer Last und/oder einer Geschwindigkeit (v) veränderbar ist.

7. Bremssystem nach Anspruch 5 oder 6, bei welchem
der Basis-Bremsdruck ein minimaler Bremsdruck ist; und
die Steuerung (22) derart ausgestaltet ist, dass der von der pneumatischen Brems-einrichtung (18) oder der elektro-pneumatischen Bremseinrichtung (20) erzeugte Bremsdruck (F) ausgehend von dem bereitgestellten Basis-Bremsdruck (F0) in Abhängigkeit von der Last und/oder der Geschwindigkeit (v) vergrößerbar ist.

8. Bremssystem nach Anspruch 5 oder 6, bei welchem
der Basis-Bremsdruck ein maximaler Bremsdruck ist; und
die Steuerung (22) derart ausgestaltet ist, dass der von der pneumatischen Bremseinrichtung (18) oder der elektro-pneumatischen Bremseinrichtung (20) erzeugte Bremsdruck (F) ausgehend von dem bereitgestellten Basis-Bremsdruck (F0) in Abhängigkeit von der Last und/oder der Geschwindigkeit (v) verkleinerbar ist.

9. Bremssystem nach einem der vorhergehenden Ansprüche 5 bis 8, bei welchem
die Steuerung (22) ausgestaltet ist, um die elektro-pneumatische Bremseinrichtung (20) so anzusteuern, dass der Bremsdruck (F) während der Schnellbremsung einen vorgegebenen unteren Grenzwert nicht unterschreitet.

10. Schienenfahrzeug mit wenigstens einem Wagen, der mit wenigstens einem pneumatischen Bremsaktuator (16) ausgestattet ist, **gekennzeichnet durch** ein Bremssystem nach einem der Ansprüche 5 bis 9.

11. Schienenfahrzeug nach Anspruch 10, bei welchem
die elektro-pneumatische Bremseinrichtung (20) im Fall einer Schnellbremsung anrechenbar ist.

## Claims

1. A method for controlling or regulating a brake system, in particular a brake system of a rail vehicle, the brake system having at least a pneumatic brake actuator (16) and an electropneumatic brake device (20) for generating a brake pressure (F),
**characterised in that**
in case of rapid braking a pneumatic brake device (18) provides a basic brake pressure (F0) and the electropneumatic brake device (20) changes the brake pressure (F) dependent on a load and/or a speed (v) from the basic brake pressure (F0) provided.

2. A method according to claim 1, in which
the basic brake pressure (F0) is a minimum brake pressure and the brake pressure (F) is increased dependent on the load and/or the speed (v) from the basic brake pressure (F0) provided.

3. A method according to claim 1, in which
the basic brake pressure (F0) is a maximum brake pressure and the brake pressure (F) is reduced dependent on the load and/or the speed (v) from the basic brake pressure (F0) provided.

4. A method according to any one of the preceding claims, in which
the brake pressure (F) does not fall below a predefined lower limit value during rapid braking.

5. A brake system, in particular of a rail vehicle, having at least a pneumatic brake actuator (16), a pneumatic brake device (18) for generating a brake pressure (F), an electropneumatic brake device (20) for generating a brake pressure (F) and a control system (22),
**characterised in that**
the control system (22) is designed to actuate the pneumatic brake device (18) in case of rapid braking in such a way that the pneumatic brake device (18) provides a basic brake pressure (F0); and
the brake pressure (F) generated by the pneumatic brake device (18) can be changed dependent on a load and/or a speed (v) from the basic brake pressure (F0) provided by the electropneumatic brake device (20).

6. A brake system, in particular of a rail vehicle, having at least a pneumatic brake actuator (16), an electropneumatic brake device (20) for generating a brake pressure (F) and a control system (22),
**characterised in that**
the control system (22) is designed to actuate the electropneumatic brake device (20) in case of rapid braking in such a way that the electropneumatic brake device (20) provides a basic brake pressure (F0); and
the brake pressure (F) generated by the electropneumatic brake device (20) can be changed dependent on a load and/or a speed (v) from the basic brake pressure (F0) provided by the electropneumatic brake device (20).

7. A brake system according to claim 5 or 6, in which
the basic brake pressure is a minimum brake pressure; and
the control system (22) is designed in such a way that the brake pressure (F) generated by the pneumatic brake device (18) or the electropneumatic brake device (20) can be increased dependent on the load and/or the speed (v) from the basic brake pressure (F0) provided.

8. A brake system according to claim 5 or 6, in which
the basic brake pressure is a maximum brake pressure; and
the control system (22) is designed in such a way that the brake pressure (F) generated by the pneumatic brake device (18) or the electropneumatic brake device (20) can be reduced dependent on the load and/or the speed (v) from the basic brake pressure (F0) provided.

9. A brake system according to any one of the preceding claims 5 to 8, in which
the control system (22) is designed to actuate the electropneumatic brake device (20) in such a way that the brake pressure (F) does not fall below a predefined lower limit value during rapid braking.

10. A rail vehicle having at least one carriage that is fitted with at least one pneumatic brake actuator (16), **characterised by** a brake system according to any one of claims 5 to 9.

11. A rail vehicle according to claim 10, in which
the electropneumatic brake device (20) can be taken into account in case of rapid braking.

## Revendications

1. Procédé de commande ou de régulation d'un système de frein, notamment d'un système de frein d'un véhicule ferroviaire, le système de frein ayant au moins un actionneur (16) pneumatique de frein et un dispositif (20) électropneumatique de frein pour la production d'une pression (F) de frein,
**caractérisé en ce que**
dans le cas d'un freinage rapide, un dispositif (18) pneumatique de frein met à disposition une pression (F0) de frein de base et le dispositif (20) électropneumatique de frein modifie, en fonction d'une charge et/ou d'une vitesse (v), la pression (F) de frein à partir de la pression (F0) de frein de base mise à disposition.

2. Procédé suivant la revendication 1, dans lequel
la pression (F0) de frein de base est une pression de frein minimum et on augmente, en fonction de la charge et/ou de la vitesse (v), la pression (F) de frein à partir de la pression (F0) de frein de base mise à disposition.

3. Procédé suivant la revendication 1, dans lequel
la pression (F0) de frein de base est une pression de frein maximum et on diminue, en fonction de la charge et/ou de la vitesse (v), la pression (F) de frein à partir de la pression (F0) de frein de base mise à disposition.

4. Procédé suivant l'une des revendications précédentes, dans lequel
la pression (F) de frein ne doit pas passer en dessous d'une valeur limite inférieure donnée à l'avance pendant le freinage rapide.

5. Système de frein, notamment d'un véhicule ferroviaire, comportant au moins un actionneur (16) pneumatique de frein, un dispositif (18) pneumatique de frein pour la production d'une pression (F) de frein, un dispositif (20) électropneumatique de frein pour la production d'une pression (F) de frein et une commande (22),
**caractérisé en ce que**
la commande (22) est conformée pour commander le dispositif (18) pneumatique de frein dans le cas d'un freinage rapide, de manière à ce que le dispositif (18) pneumatique de frein mette à disposition une pression (F0) de frein de base ; et
la pression (F) de frein produite par le dispositif (18) pneumatique de frein peut, en fonction d'une charge et/ou d'une vitesse (v), être modifiée par le dispositif (20) électropneumatique de frein, à partir de la pression (F0) de frein de base mise à disposition.

6. Système de frein, notamment d'un véhicule ferroviaire, comportant au moins un actionneur (16) pneumatique de frein, un dispositif (20) électropneumatique de frein pour la production d'une pression (F) de frein et une commande (22),
**caractérisé en ce que**
la commande (22) est conformée pour commander le dispositif (20) électropneumatique de frein dans le cas d'un freinage rapide, de manière à ce que le dispositif (20) électropneumatique de frein mette à disposition une pression (F0) de frein de base ; et
la pression (F) de frein produite par le dispositif (20) électropneumatique de frein peut, en fonction d'une charge et/ou d'une vitesse (v), être modifiée par le dispositif (20) électropneumatique de frein, à partir de la pression (F0) de frein de base mise à disposition.

7. Système de frein suivant la revendication 5 ou 6, dans lequel
la pression de frein de base est une pression de frein minimum ; et
la commande (22) est conformée de manière à ce que la pression (F) de frein, produite par le dispositif (18) pneumatique de frein ou par le dispositif (20) électropneumatique de frein, puisse, en fonction de la charge et/ou de la vitesse (v), être augmentée à partir de la pression (F0) de frein de base mise à disposition.

8. Système de frein suivant la revendication 5 ou 6, dans lequel
la pression de frein de base est une pression de frein maximum ; et
la commande (22) est conformée de manière à ce que la pression (F) de frein, produite par le dispositif (18) pneumatique de frein ou par le dispositif (20) électropneumatique de frein, puisse, en fonction de la charge et/ou de la vitesse (v), être diminuée à partir de la pression (F0) de frein de base mise à disposition.

9. Système de frein suivant l'une des revendications 5 à 8 précédentes, dans lequel
la commande (22) est conformée pour commander le dispositif (20) électropneumatique de frein, de manière à ce que la pression (F) de frein ne devienne pas inférieure à une valeur limite inférieure donnée à l'avance pendant le freinage rapide.

10. Véhicule ferroviaire ayant au moins une voiture, qui est équipée d'au moins un actionneur (16) pneumatique de frein, **caractérisé par** un système de frein suivant l'une des revendications 5 à 9.

11. Véhicule ferroviaire suivant la revendication 10, dans lequel
le dispositif (20) électropneumatique de frein peut être calculé dans le cas d'un freinage rapide.
